(19) **Europäisches Patentamt**

**European Patent Office**

**Office européen des brevets**

(11) **EP 1 058 628 B1**

(12) **EUROPÄISCHE PATENTSCHRIFT**

(45) Veröffentlichungstag und Bekanntmachung des Hinweises auf die Patenterteilung:
**26.11.2003** **Patentblatt 2003/48**

(21) Anmeldenummer: **99973519.4**

(22) Anmeldetag: **08.09.1999**

(51) Int Cl.$^7$: **B60K 41/06**

(86) Internationale Anmeldenummer:
**PCT/DE99/02829**

(87) Internationale Veröffentlichungsnummer:
**WO 00/038943 (06.07.2000 Gazette 2000/27)**

(54) **VERFAHREN UND VORRICHTUNG ZUR STEUERUNG DES ANTRIEBSSTRANGS EINES FAHRZEUGS**

METHOD FOR ROUTING MESSAGES IN AT LEAST ONE TELECOMMUNICATIONS NETWORK ACCORDING TO GSM STANDARD

PROCEDE D'ACHEMINEMENT DE MESSAGES DANS AU MOINS UN RESEAU DE TELECOMMUNICATION SELON LA NORME GSM

(84) Benannte Vertragsstaaten:
**DE FR GB**

(30) Priorität: **29.12.1998 DE 19860645**

(43) Veröffentlichungstag der Anmeldung:
**13.12.2000 Patentblatt 2000/50**

(73) Patentinhaber: **ROBERT BOSCH GMBH**
**70442 Stuttgart (DE)**

(72) Erfinder:
• **LOEFFLER, Juergen**
**71364 Winnenden (DE)**
• **HUELSER, Holger**
**70329 Stuttgart (DE)**

(56) Entgegenhaltungen:
**DE-A- 19 611 502** **DE-A- 19 644 881**

EP 1 058 628 B1

**Beschreibung**

Stand der Technik

Die Erfindung betrifft ein Verfahren bzw. eine Vorrichtung zur Steuerung des Antriebsstrangs eines Fahrzeugs nach den Oberbegriffen der unabhängigen Ansprüche.

In Kraftfahrzeugen mit einem Antriebstrangmanagement kann das Antriebsmoment bzw. die Antriebsleistung durch eine elektronische Ansteuerung von Motor und Getriebe eingestellt werden. Um das vom Fahrer gewünschte Antriebsmoment bzw. die entsprechenden Antriebsleistung bereitzustellen, wird vom Motor ein Ausgangsmoment und vom Getriebe eine Soll-Übersetzung gefordert. Dabei ist es wesentlich, dieses Wunschmoment bzw. die Wunschleistung geeignet zu bestimmen.

Die DE 196 93 324 A zeigt ein Motorsteuerungssystem, bei dem mittels eines Kennfeldes in Abhängigkeit von der Motordrehzahl und der Stellung des vom Fahrer des Fahrzeugs betätigbaren Fahrpedals ein relatives Motorausgangsmoment vorgibt. Unter Berücksichtigung des am aktuellen Betriebspunkt möglichen Momentenintervalls des Motors wird daraus ein Sollwert für das Motormoment bestimmt. Dieses Verfahren bezieht sich lediglich auf eine Motorleistungssteuerung, nicht jedoch auf eine Antriebsstrangsteuerung, bei der alle den Antriebsstrang bildenden Komponenten wie Motor, Kupplung, Drehmomentenwandler und Getriebe berücksichtigt werden.

In der EP 0 557 299 B1 wird ein Verfahren beschrieben, bei dem aus einem Kennfeld in Abhängigkeit von der Fahrpedalstellung und der Fahrzeuggeschwindigkeit ein Absolutwert für das Abtriebsmoment gebildet wird.

Aus der EP 0 406 615 B1 ist bekannt, wie unter anderem aus der Betätigung des Fahrpedals auf die Fahraktivität bzw. den Fahrtyp des Fahrers geschlossen werden kann.

Aus der DE 196 44 881 A ist ein gattungsgemäßen Verfahren zur Steuerung des Antriebsstrangs bekannt.

Die Aufgabe der vorliegenden Erfindung besteht darin, bei einer Antriebsstrangsteuerung das einzustellende Antriebsmoment oder die einzustellende Antriebsleistung optimal an den Fahrerwunsch und an den momentan vorliegenden Fahrzustand anzupassen.

Diese Aufgabe wird durch die Merkmale des unabhängigen Anspruchs gelöst.

Vorteile der Erfindung

Wie schon erwähnt, geht die Erfindung aus von einem Verfahren bzw. einer Vorrichtung zur Steuerung des Antriebsstrangs eines Fahrzeugs mit einem vom Fahrer des Fahrzeugs betätigbaren Fahrpedal. Hierbei wird ein Sollwert für das Antriebsmoment oder ein Sollwert für die Antriebsleistung abhängig von der Stellung des Fahrpedals gebildet. Der Antriebsstrang wird dann derart gesteuert, daß abhängig von dem gebildeten Sollwert das Antriebsmoment oder die Antriebsleistung eingestellt wird. Der Kern der Erfindung besteht darin, daß ein Intervall mit vorgebbaren Intervallgrenzen ermittelt wird, wobei die Intervallgrenzen Maximal- und Minimalwerte für das einzustellende Antriebsmoment oder die einzustellende Antriebsleistung repräsentieren. Die Sollwerte werden erfindungsgemäß abhängig von dem ermittelten Intervall gebildet. Durch die erfindungsgemäße Antriebsstrangsteuerung wird die Basis für eine optimale Anpassung des einzustellenden Antriebsmoments oder der einzustellenden Antriebsleistung an den Fahrerwunsch und an den momentan vorliegenden Fahrzustand ermöglicht.

In einer vorteilhaften Ausgestaltung der Erfindung ist vorgesehen, daß die untere Intervallgrenze abhängig von der vom Fahrzeugmotor momentan realisierbaren Minimalleistung oder abhängig von dem vom Fahrzeugmotor momentan realisierbaren Minimalmoment, abhängig von der momentanen Momentenübersetzung des Getriebes, abhängig von dem Betriebszustand eines im Antriebsstrang befindlichen Wandlers und/oder abhängig von dem Betriebszustand einer im Antriebsstrang befindlichen Kupplung, insbesondere einer Wandlerüberbrückungskupplung, ermittelt wird.

Die obere Intervallgrenze kann abhängig von der vom Fahrzeugmotor momentan realisierbaren Maximalleistung oder abhängig von dem vom Fahrzeugmotor momentan realisierbaren Maximalmoment und/oder abhängig von dem momentanen Wirkungsgrad der den Antriebsstrang bildenden Komponenten ermittelt werden.

Besonders vorteilhaft ist es, eine die Fahrzeuglängsgeschwindigkeit repräsentierende Geschwindigkeitsgröße zu erfassen und die obere Intervallgrenze und/oder die untere Intervallgrenze abhängig von der erfaßten Geschwindigkeitsgröße zu ermitteln.

Weiterhin ist in einer bevorzugten Ausführungsform der Erfindung vorgesehen, daß eine das Fahrverhalten des Fahrers repräsentierende Fahrertypgröße ermittelt wird. Der Sollwert für das Antriebsmoment oder der Sollwert für die Antriebsleistung wird dann abhängig von der ermittelten Fahrertypgröße gebildet.

Die Stellung des Fahrpedals kann mit einem vorgebbaren unteren Schwellwert und/oder mit einem vorgebbaren oberen Schwellwert verglichen werden. Bei dieser Ausführungsform der Erfindung wird der Sollwert für das Antriebsmoment oder der Sollwert für die Antriebsleistung abhängig von diesem Vergleich gebildet. Hierbei ist insbesondere vorgesehen, daß eine die Fahrzeuglängsgeschwindigkeit repräsentierende Geschwindigkeitsgröße erfaßt wird, und wenigstens ein Schwellwert abhängig von der erfaßten Geschwindigkeitsgröße vorgegeben wird.

Weiterhin kann bei der zuletzt beschriebenen Ausführungsform vorgesehen sein, daß dann, wenn die Stellung des Fahrpedals den unteren Schwellwert unterschreitet, ein negativer Sollwert eingestellt wird (Schleppbetrieb). Wenn die Stellung des Fahrpedals innerhalb der Schwellwerte liegt, so wird ein Sollwert innerhalb der Intervallgrenzen eingestellt (Normalbetrieb). Wenn die Stellung des Fahrpedals den oberen Schwellwert überschreitet, so wird ein Sollwert eingestellt, der die obere Intervallgrenze überschreitet (Kickdown-Betrieb).

Weitere vorteilhafte Ausgestaltungen der Erfindung sind den Unteransprüchen zu entnehmen.

Zeichnung

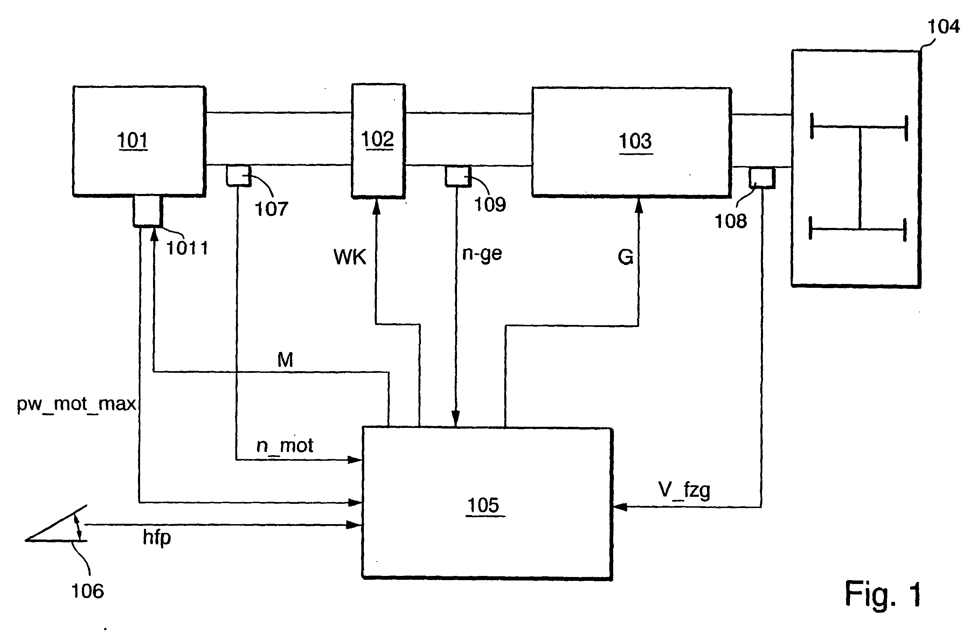

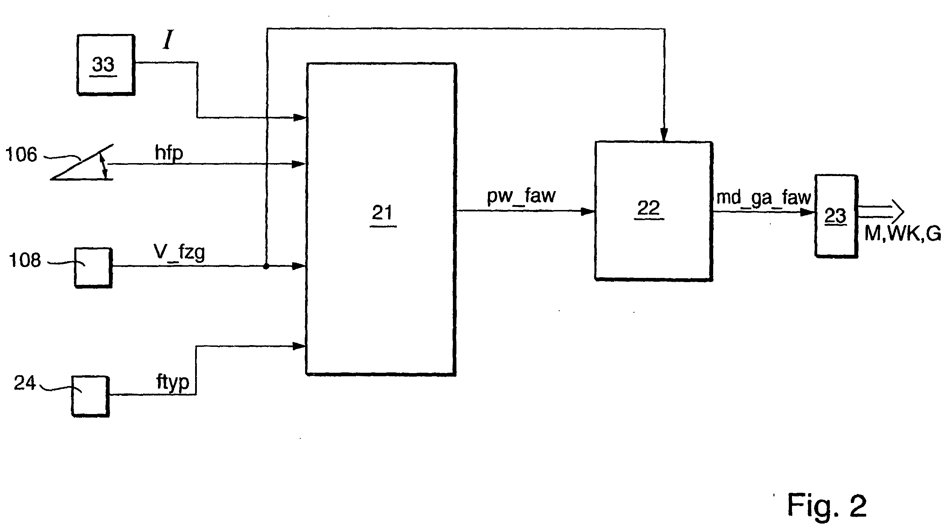

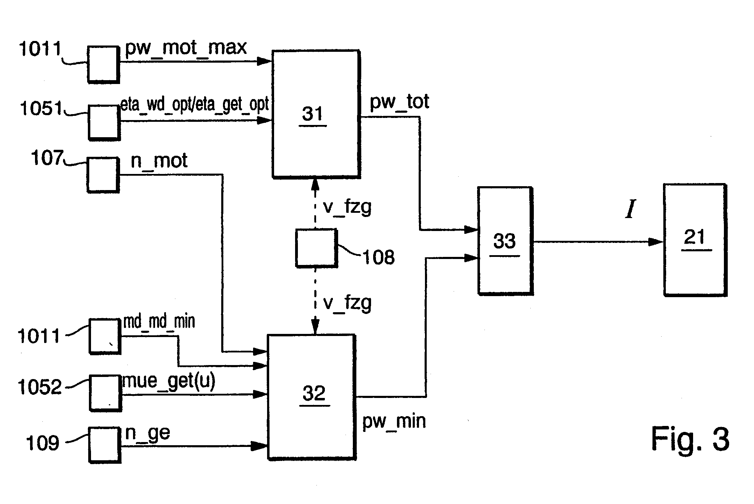

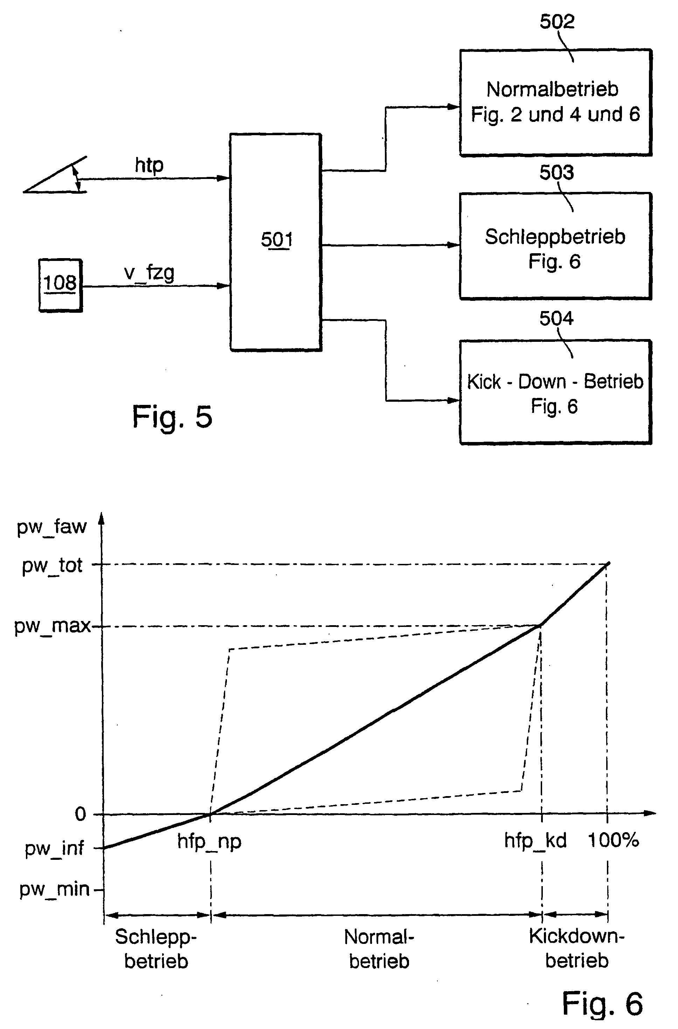

Die Figur 1 zeigt schematisch den Antriebsstrang eines Kraftfahrzeugs. Die Figur 2 gibt eine Übersicht der Erfindung anhand eines Blockschaltbildes, während die Figuren 3 4, 5 Einzelheiten darstellen. Die Figur 6 offenbart eie Ausführungsform der Erfindung anhand der Zuordnung von Fahrpedalstellungen zur Antriebsleistung.

Ausführungsbeispiele

Anhand der im folgenden beschriebenen Ausführungsbeispiele soll die Erfindung näher erläutert werden.

Die Figur 1 zeigt schematisch den Antriebsstrang eines Kraftfahrzeugs mit einem Fahrzeugmotor 101, einem Drehmomentenwandler 102, der durch eine Wandlerüberbrückungskupplung überbrückbar ausgelegt ist, einem Getriebe 103, das stufenlos oder stufenweise verstellbar ausgelegt sein kann, sowie mit dem Block 104 die Antriebsräder (ggf. mit einem nicht dargestellten Differentialgetriebe).

Mit den Drehzahlsensoren 107, 108 und 109 wird die Motordrehzahl $n\_mot$, die Getriebeausgangsdrehzahl bzw. die mit der Getriebeausgangsdrehzahl in einfacher Weise zusammenhängende Fahrzeuglängsgeschwindigkeit $v\_fzg$ und die Getriebeeingangsdrehzahl $n\_ge$ gemessen und dem Steuerblock 105 zugeführt. Weiterhin wird die Stellung hfp des vom Fahrer des Fahrzeugs betätigbaren Fahrpedals 106 gemessen und dem Steuerblock 105 zugeführt. Von der Motorsteuereinheit 1011 wird dem Steuerblock 105 die momentan maximal erreichbare absolute Spitzenleistung $pw\_mot\_max$ des Motors 101 zugeführt.

Zur Steuerung der Komponenten des Antriebsstrangs steuert der Steuerblock 105 die Motorsteuereinheit 1011 mit dem Signal M, die Überbrückungskupplung des Drehmomentenwandlers 102 mit dem Signal WK sowie das Getriebe mit dem Signal G an. Durch das Signal M wird beispielsweise ein Motor-Soll-Moment oder eine Motor-Soll-Leistung vorgegeben, mit dem Signal WK wird beispielsweise die Wandlerüberbrückungskupplung geöffnet oder geschlossen und mit dem Signal G die Getriebeübersetzung gesteuert.

Erfindungsgemäß wird aus der relativen Fahrpedalstellung ein Soll-Getriebeausgangsmoment $md\_ga\_faw$ ermittelt, wobei die Fahrzeuggeschwindigkeit $v\_fzg$, ein geeignet definiertes mögliches Leistungsintervall I am Getriebeausgang sowie der Fahrertyp ftyp berücksichtigt werden. Das Soll-Getriebeausgangsmoment $md\_ga\_faw$ ist repräsentativ für das gewünschte Antriebsmoment, da diese beiden Größen bei konstanter Differentialüberstzung in einem festen Verhältnis zueinander stehen.

Wie erwähnt beschreibt die Größe $v\_fzg$ den Betrag der Fahrzeuggeschwindigkeit, wobei $v\_fzg \geq 0$ km/h sein soll.

Die relative Fahrpedalstellung hfp bewegt sich im Intervall [0,100], der Fahrertyp ftyp im Intervall [0,1]. Dabei steht der Wert 0 für einen sehr ökonomischen und der Wert 1 für einen maximal leistungsorientierten Fahrer.

Der gesamte Berechnungsalgorithmus mit allen seinen erfindungsgemäßen Ausführungsformen zeichnet sich durch folgende Punkte aus:

a) Die Definition eines möglichen Leistungsintervalls I=[pw_min, pw_tot] am Getriebeausgang, das als Grundlage für die Berechnung des Fahrerwunschmomentes dient.

b) Eine fahrzeuggeschwindigkeitsabhängige Begrenzung dieses möglichen Leistungsintervalls I.

c) Eine fahrertypabhängige Fahrpedalcharakteristik im Normalbetrieb.

d) Eine geschwindigkeitsabhängige Verschiebung des Nullpunktes des Fahrpedals.

e) Eine Sonderbehandlung für den Kickdown-Betrieb.

Der prinzipielle Ablauf soll anhand der Figur 2 verdeutlicht werden.

Zunächst wird in dem Rechenblock 21 aus den Größen hfp (Fahrpedalstellung), dem Intervall I = [pw_min, pw_tot] (Ausgang eines noch zu beschreibenden Blocks 33/Figur 3), $v\_fzg$ (Fahrzeuglängsgeschwindigkeit) und ftyp (Fahrertyp) die Soll-Leistung $pw\_faw$ am Getriebeausgang ermittelt.

Die den Fahrertyp repräsentierende Größe ftyp wird im Block 24 in bekannter Weise aus der Betätigung des Fahrpedals 106 ermittelt, insbesondere aus der zeitlichen Änderung der Fahrpedalstellung hfp und ggf. aus weiteren Größen wie der Fahrzeuglängsgeschwindigkeit und/oder der Fahrzeugquerbeschleunigung. Hierzu sei beispielhaft auf die eingangs zitierte EP 0 406 615 B1 verwiesen.

In einem weiteren Schritt wird aus der im Block 21 der Figur 2 gebildeten Soll-Leistung pw_faw am Getriebeausgang in dem Rechenblock 22 das Soll-Getriebeausgangsmoment md_ga_faw abgeleitet. Für diese Berechnung wird die Getriebeausgangsdrehzahl n_ga benötigt. Abhängig von dem Soll-Getriebeausgangsmoment md_ga_faw werden dann im Block 23 die beschriebenen Signal M, WK und G zur Ansteuerung der Komponenten des Antriebsstrangs derart gebildet, daß die gewünschte Soll-Getriebeausgangsmoment md_ga_faw eingestellt wird. Selbstverständlich kann im Block 23 das gewünschte Soll-Getriebeausgangsmoment md_ga_faw modifiziert, beispielsweise an den momentanen Fahrzustand angepaßt werden.

Im Rechenblock 21 werden die Betriebsmodi Normalbetrieb, Schleppbetrieb und Kickdown-Betrieb unterschieden. Die Betriebsmodi leiten sich aus der Fahrpedalstellung hfp ab, wobei ein geeignet definierter Nullpunkt hfp_np und ein geeignet definierter Kickdown-Punkt hfp_kd berücksichtigt werden. Damit können die Modi wie folgt festgestellt werden:

Normalbetrieb: hfp_np $\leq$ hfp $\leq$ hfp_kd
Schleppbetrieb: hfp < hfp_np
Kickdown-Betrieb:hfp > hfp_kd

Im einzelnen werden die Berechnungen im Rechenblock 21 wie folgt vorgenommen:

Zu a): Berechnung des Leistungsintervalls (Figur 3) :

Die maximal am Getriebeausgang erreichbare Leistung pw_tot wird im Block 31 der Figur 3 aus dem Produkt der absoluten Spitzenleistung pw_mot_max des Motors und den optimalen Wirkungsgraden eta_get_opt und eta_wd_opt von Getriebe 103 und Drehmomentwandler 102 ermittelt.

$$pw\_tot = pw\_mot\_max * eta\_get\_opt * eta\_wd\_opt$$

Die Spitzenleistung des Motors wird in diesem Ausführungsbeispiel von der Motorsteuerung 1011 geliefert, während die Wirkungsgrade eta_get_opt und eta_wd_opt im allgemeinen in der Antriebsstrangsteuerung 105 als Kennfelder (Block 1051) vorliegen. Den Kennfeldern werden im allgemeinen zur Ermittlung der Wirkungsgrade die Ein- und/oder Ausgangsdrehzahlen des Wandlers und des Getriebes zugeführt.

Die Größe pw_mot_max hängt von der Motortemperatur, der Kraftstoffqualität und von Umgebungsbedingungen, wie z.B. dem Luftdruck, ab:

$$pw\_mot\_max = f(Motortemperatur, Kraftstoffqualität,$$

$$Umgebungsbedingungen).$$

Die minimal am Getriebeausgang im Schubbetrieb bzw. Schiebebetrieb erreichbare Leistung wird im Block 32 für die aktuelle Motordrehzahl n_mot und die aktuelle Drehzahlübersetzung des Getriebes u berechnet. Sie bestimmt sich zu

$$pw\_min = md\_ma\_min(n\_mot) * mue\_get(u) *$$

$$mue\_wd\_schub(n\_ge, n\_mot, Wandlerzustand)$$

mit

| | |
|---|---|
| md_ma_min: | minimal mögliches Motormoment (von Motorsteuerung 1011), abhängig von der Motordrehzahl n_mot. |
| n_mot: | aktuelle Motordrehzahl (von Sensor 107). |
| mue_get(u): | Momentenübersetzung des Getriebes bei der aktuellen Drehzahlübersetzung u (Block 1051, liegt im allgemeinen im Steuerblock 105 vor). |
| mue_wd_schub: | Momentenverstärkung des Wandlers im Schubbetrieb bzw. Schiebebetrieb als Funktion der aktueller Getriebeeingangsdrehzahl n_ge, der Motordrehzahl n_mot und des Wandlerzustands (z.B: |

Wandlerkupplung offen/geschlossen, Auswertung des Steuersignals WK).

Die Intervallgrenzen pw_tot und pw_min des Intervalls I werden über den Block 33 der schon beschriebenen Einheit 21 (Figur 2) zugeführt.

Zu b): Geschwindigkeitsabhängige Begrenzung des Leitungsintervalls I:

Zu dieser Ausgestaltung der Erfindung wird den Blöcken 31 und 32 in der Figur 3 die Fahrzeuggeschwindigkeit vom Sensor 108 zugeführt. Durch eine fahrzeuggeschwindigkeitsabhängige Begrenzung der am Kickdown-Punkt hfp_kd geforderten Leistung kann eine feinfühlige Dosierung des Fahrerwunschmomentes auch bei kleinen Geschwindigkeiten erreicht werden. Am Kickdown-Punkt wird die Leistung

$$pw\_max = f1(v\_fzg) * pw\_tot$$

gefordert. Die Funktion f1 kann dabei durch eine vorgebbare Kennlinie realisiert werden. Die geschwindigkeitsabhängige Begrenzung hat folgenden Hintergrund:

Bei geringen Geschwindigkeiten kann aufgrund der Abhängigkeit des maximalen Motorausgangsmoments von der Motordrehzahl am Getriebeausgang nicht die absolut mögliche Leistung pw_tot zur Verfügung gestellt werden. Es ist daher vorteilhaft, die vom Fahrpedal am Kickdown-Punkt geforderte Leistung in diesem Betriebsbereich auf die jeweils bei der aktuellen Geschwindigkeit maximal erreichbare Leistung zu begrenzen.

Weiterhin ist es vorteilhaft, das bei der Fahrpedalstellung hfp = 0 geforderte Schleppmoment geschwindigkeitsabhängig zu begrenzen. Die dann geforderte Leistung ist

$$pw\_inf = f2(v\_fzg) * pw\_min.$$

Die Funktion f2 kann durch eine vorgebbare Kennlinie realisiert werden.

Im Schleppbetrieb werden vom Fahrpedal 106 Leistungen im Intervall [pw_inf, 0) gefordert. Im Normalbetrieb wird das Intervall [0, pw_max] und im Kickdown-Betrieb das Intervall [pw_max, pw_tot] abgedeckt. Die Betriebsmodi und ihre Zuordnung zu den Leistungsintervallen sind in der Figur 6 als Prinzipskizze dargestellt.

Im Schleppbetrieb wird die geforderte Leistung pw_faw nach der Gleichung

$$pw\_faw = 1 - \frac{hfp}{hfp\_np} * pw\_inf$$

ermittelt.

Im Kickdown-Betrieb errechnet sich die Größe pw_faw entsprechend der Vorschrift

$$pw\_faw = \frac{hfp - hfp\_kd}{100\ [\%] - hfp\_kd} * (pw\_tot - pw\_max) + pw\_max.$$

Im Normalbetrieb wird eine fahrertypabhängige Fahrpedalcharakteristik herangezogen. Die nichtlineare Zuordnung des Intervalls [hfp_np, hfp_kd] zu dem Leistungsintervall [0, pw_max] ist in der Figur 6 durch einen mit gestrichelten Linien umrandeten Bereich angedeutet.

Zu c): Berechnung der Wunschleistung im Normalbetrieb:

Zur Berechnung der Größe pw_faw im Normalbetrieb wird zunächst die relative Fahrpedalstellung bezogen auf das Intervall [hfp_np, hfp_kd] ermittelt:

$$fp\_rel = \frac{hfp - hfp\_np}{hfp\_kd - hfp\_np}.$$

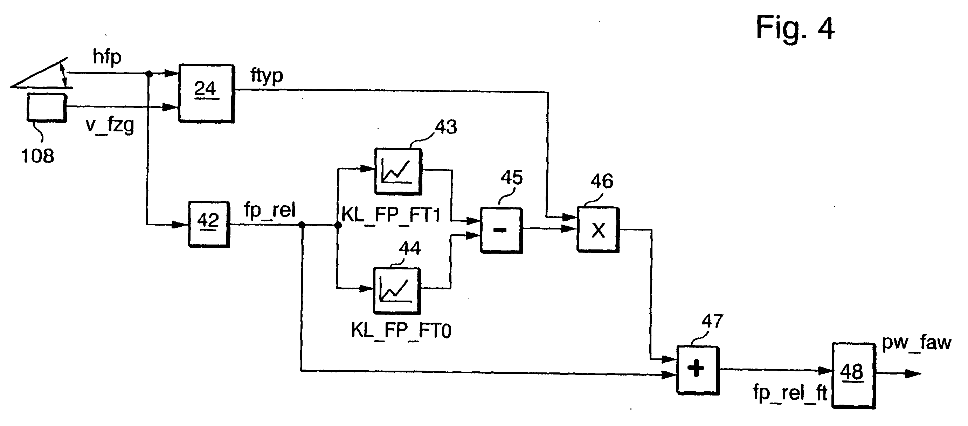

dies geschieht im Block 42 der Figur 4.

Die Größe fp_rel bewegt sich im Intervall [0, 1]. Dieses Intervall wird unter Berücksichtigung des Fahrertyps auf ein Intervall mit den gleichen Grenzen abgebildet:

$$[0, 1] \xrightarrow{\text{Abbildung g}} [0,1] \ .$$

Das Ergebnis dieser Abbildung ist eine Größe fp_rel_ft. Die Abbildung g wird in der Figur 4 durch ein Datenflußdiagramm beschrieben.

Der Fahrertyp ftyp wird mittels des schon beschriebenen Blocks 24 ermittelt. Der fahrertypabhängige Einfluß wird durch die Kennlinien KL_FP_FT0 43 für einen sehr ökonomischen und KL_FP_FT1 42 für einen maximal leistungsorientierten Fahrer berücksichtigt. Zwischen den aus diesen Kennlinien ausgelesenen Werten wird eine Interpolation (Blöcke 45, 46 und 47) entsprechend des Fahrertyps ftyp vorgenommen.

Die Kennlinien KL_FP_FT0 und KL_FP_FT1 können in einer Variante des Verfahrens durch zusätzliche Berücksichtigung der Fahrzeuggeschwindigkeit zu Kennfeldern erweitert werden.

Die im Normalbetrieb geforderte Leistung errechnet sich im Block 48 zu

$$pw\_faw = fp\_rel\_ft * pw\_max.$$

Zu d): Berechnung des Nullpunktes:

Im Block 501 der Figur 5 findet die schon beschriebene Zuordnung der Fahrpedalstellung zu den Betriebsmodi Normalbetrieb, Schleppbetrieb und Kickdown-Betrieb wie folgt statt:

Normalbetrieb: hfp_np ≤ hfp ≤ hfp_kd
Schleppbetrieb: hfp < hfp_np
Kickdown-Betrieb:hfp > hfp_kd

Durch eine fahrzeuggeschwindigkeitsabhängige Verschiebung des Nullpunktes hfp_np kann die Größe des Bereiches für Schleppbetrieb variiert werden. Hierzu wird dem Block 501 die Fahrzeuggeschwindigkeit v_fzg zugeführt.

Bei hohen Fahrzeuggeschwindigkeiten ist ein großer Wert für hfp_np sinnvoll, bei kleinen Fahrzeuggeschwindigkeiten kann dieser zu Null werden. In diesem Fall tritt selbst bei hfp = 0 kein Schleppbetrieb mehr ein, so daß z.B. ein Ausrollen des Fahrzeugs vor einer Ampel ohne Schleppmoment realisiert werden kann. Die Bestimmung von hfp_np wird durch ein Kennfeld mit der Eingangsgröße v_fzg realisiert.

Zu e): Berechnung des Kickdown-Punktes:

Im Block 501 der Figur 5 kann durch eine fahrzeuggeschwindigkeitsabhängige Verschiebung des Kickdown-Punktes hfp_kd die Größe des Bereiches für Kickdown-Betrieb variiert werden. Die Bestimmung von hfp_kd wird durch ein Kennfeld mit der Eingangsgröße v_fzg realisiert.

Die unter Berücksichtigung der Punkte a) bis e) im Rechenblock 21 der Figur 2 errechnete Soll-Getriebeausgangsleistung pw_faw wird im Rechenblock 22 in ein Soll-Getriebeausgangsmoment md_ga_faw umgerechnet:

$$md\_ga\_faw = \frac{pw\_faw}{2 * \pi * n\_ga\_strich}.$$

Dabei ist n_ga_strich die in ihrem Wert durch eine untere Schranke begrenzte Getriebeausgangsdrehzahl n_ga.

Übersicht über verwendete Variablennamen:

| | |
|---|---|
| fp_rel | relative Fahrpedalstellung, bezogen auf das Intervall [hfp_np,hfp_kd] |
| ftyp | Fahrertyp |
| hfp | relative Fahrpedalstellung |
| hfp_kd | Kickdown-Punkt für Fahrpedal |
| hfp_np | Nullpunkt für Fahrpedal |
| md_ga_faw | Soll-Getriebeausgangsmoment gem. Fahrerwunsch |
| n_ga | Getriebeausgangsdrehzahl |

| pw_faw | Soll-Getriebeausgangsleistung gem. Fahrerwunsch |
| pw_ga | Getriebeausgangsleistung |
| pw_inf | geforderte Getriebeausgangsleistung bei hfp = 0 |
| pw_max | geforderte Getriebeausgangsleistung am Kickdown-Punkt |
| pw_min | minimal erreichbare Leistung am Getriebeausgang |
| pw_tot | maximal absolut erreichbare Leistung am Getriebeausgang |
| u | Drehzahlübersetzung des Getriebes |
| u_max | maximale Drehzahlübersetzung des Getriebes |
| v_fzg | Fahrzeuggeschwindigkeit |

**Patentansprüche**

1. Verfahren zur Steuerung des Antriebsstrangs eines Fahrzeugs mit einem vom Fahrer des Fahrzeugs betätigbaren Fahrpedal, bei dem ein Sollwert (md_ga_faw) für das Antriebsmoment oder ein Sollwert (pw_faw) für die Antriebsleistung abhängig von der Stellung (hfp) des Fahrpedals gebildet wird und der Antriebsstrang derart gesteuert wird, dass abhängig von dem gebildeten Sollwert (md_ga_faw, pw_faw) das Antriebsmoment oder die Antriebsleistung eingestellt wird, wobei ein Intervall (I) mit vorgebbaren Intervallgrenzen (pw_min, pw_tot) ermittelt wird, dessen Intervallgrenzen Maximal- und Minimalwerte für das einzustellende Antriebsmoment oder die einzustellende Antriebsleistung repräsentieren, und die Sollwerte (md_ga_faw, pw_faw) abhängig von dem ermittelten Intervall (I) gebildet werden, wobei die Stellung (hfp) des Fahrpedals mit einem unteren Schwellwert (hfp_np) und/ oder mit einem oberen Schwellwert (hfp_kd) verglichen wird und der Sollwert (md_ga_faw) für das Antriebsmoment oder der Sollwert (pw_faw) für die Antriebsleistung abhängig von diesem Vergleich gebildet wird, wobei eine die Fahrzeuglängsgeschwindigkeit repräsentierende Geschwindigkeitsgröße (v_fzg) erfasst wird **dadurch gekennzeichnet, dass** die Schwellwerte vorgebbar sind und wenigstens ein Schwellwert abhängig von der erfassten Geschwindigkeitsgröße (v_fzg) vorgegeben wird.

2. Verfahren nach Anspruch 1 oder 2, **dadurch gekennzeichnet, dass**

   - dann, wenn die Stellung (hfp) des Fahrpedals den unteren Schwellwert (hfp_np) unterschreitet, ein negativer Sollwert (md_ga_faw, pw_faw) eingestellt wird (Schleppbetrieb), und/oder
   - dann, wenn die Stellung (hfp) des Fahrpedals innerhalb der Schwellwerte (hfp_np, hfp_kd) liegt, ein Sollwert (md_ga_faw, pw_faw) innerhalb der Intervallgrenzen (pw_min, pw_tot) eingestellt wird (Normalbetrieb), und/ oder
   - dann, wenn die Stellung (hfp) des Fahrpedals den oberen Schwellwert (hfp_kd) überschreitet, ein Sollwert (md_ga_faw, pw_faw) eingestellt wird, der die obere Intervallgrenze überschreitet (Kickdown-Betrieb).

3. Verfahren nach Anspruch 1, **dadurch gekennzeichnet, daß**

   - die untere Intervallgrenze (pw_min) abhängig von der vom Fahrzeugmotor (101) momentan realisierbaren Minimalleistung oder abhängig von dem vom Fahrzeugmotor (101) momentan realisierbaren Minimalmoment, abhängig von der momentanen Momentenübersetzung [mue_get(u)] des Getriebes (103), abhängig von dem Betriebszustand eines im Antriebsstrang befindlichen Wandlers (102) und/oder abhängig von dem Betriebszustand einer im Antriebsstrang befindlichen Kupplung ermittelt wird und/oder
   - die obere Intervallgrenze (pw_tot) abhängig von der vom Fahrzeugmotor (101) momentan realisierbaren Maximalleistung oder abhängig von dem vom Fahrzeugmotor (101) momentan realisierbaren Maximalmoment und/oder abhängig von dem momentanen Wirkungsgrad der den Antriebsstrang bildenden Komponenten (102, 103) ermittelt wird.

4. Verfahren nach Anspruch 1, **dadurch gekennzeichnet, daß** eine die Fahrzeuglängsgeschwindigkeit repräsentierende Geschwindigkeitsgröße (v_fzg) erfasst wird und die obere Intervallgrenze (pw_tot) und/oder die untere Intervallgrenze (pw_min) abhängig von der erfassten Geschwindigkeitsgröße (v_fzg) ermittelt wird.

5. Verfahren nach Anspruch 1, **dadurch gekennzeichnet, daß** eine das Fahrverhalten des Fahrers repräsentierende Fahrertypgröße (ftyp) ermittelt wird und der Sollwert (md_ga_faw) für das Antriebsmoment oder der Sollwert (pw_faw) für die Antriebsleistung abhängig von der ermittelten Fahrertypgröße (ftyp) gebildet wird.

**Claims**

1. Method for controlling the drive train of a vehicle having an accelerator pedal which can be actuated by the driver of the vehicle and in which a setpoint value (md_ga_faw) for the drive torque or a setpoint value (pw_faw) for the drive power is formed as a function of the position (hfp) of the accelerator pedal, and the drive train is controlled in such a way that the drive torque or the drive power is set as a function of the setpoint value (md_ga_faw, pw_faw) formed, an interval (I) with predeterminable interval limits (pw_min, pw_tot) being determined, the interval limits of which represent maximum values and minimum values for the drive torque to be set or the drive power to be set, and the setpoint values (md_ga_faw, pw_faw) being formed as a function of the interval (I) which is determined, the position (hfp) of the accelerator pedal being compared with a lower threshold value (hfp_np) and/or with an upper threshold value (hfp_kd), and the setpoint value (md_ga_faw) for the drive torque or the setpoint value (pw_faw) for the drive power being formed as a function of this comparison, a speed variable (v_fzg) which represents the longitudinal speed of the vehicle being sensed, **characterized in that** the threshold values can be predetermined and at least one threshold value is predetermined as a function of the sensed speed variable (v_fzg).

2. Method according to Claim 1 or 2, **characterized in that**

   - if the position (hfp) of the accelerator pedal drops below the lower threshold value (hfp_np), a negative setpoint value (md_ga_faw, pw_faw) is set (overrun mode), and/or
   - if the position (hfp) of the accelerator pedal lies within the threshold values (hfp_np, hfp_kd), a setpoint value (md_ga_faw, pw_faw) is set within the interval limits (pw_min, pw_tot), (normal mode), and/or
   - if the position (hfp) of the accelerator pedal exceeds the upper threshold value (hfp_kd), a setpoint value (md_ga_faw, pw_faw) which exceeds the upper interval limit (kickdown mode) is set.

3. Method according to Claim 1, **characterized in that**

   - the lower interval limit (pw_min) is determined as a function of the minimum power which can be implemented by the vehicle engine (101) at a particular time, or as a function of the minimum torque which can be implemented by the vehicle engine (101) at a particular time, as a function of the torque transmission ratio [mue_get (u)] of the gearbox (103), at a particular time, as a function of the operating state of a converter (102) which is located in the drive train and/or as a function of the operating state of a clutch which is located in the drive train and/or
   - the upper interval limit (pw_tot) is determined as a function of the maximum power which can be implemented by the vehicle engine (101) at a particular time or as a function of the maximum torque which can be implemented by the vehicle engine (101) at a particular time and/or as a function of the efficiency, at a particular time, of the components (102, 103) which form the drive train.

4. Method according to Claim 1, **characterized in that** a speed variable (v_fzg) which represents the longitudinal speed of the vehicle is sensed and the upper interval limit (pw_tot) and/or the lower interval limit (pw_min) are determined as a function of the sensed speed variable (v_fzg).

5. Method according to Claim 1, **characterized in that** a driver-type variable (ftyp) which represents the driving behaviour of the driver is determined, and the setpoint value (md_ga_faw) for the drive torque or the setpoint value (pw_faw) for the drive power is formed as a function of the driver-type variable (ftyp) which is determined.

**Revendications**

1. Procédé de commande de la ligne de transmission d'un véhicule comportant une pédale d'accélérateur actionnée par le conducteur du véhicule, selon lequel on forme une valeur de consigne (md-ga-faw) du couple moteur ou une valeur de consigne (pw-faw) de la puissance motrice suivant la position (hfp) de la pédale d'accélérateur et on commande la ligne de transmission de façon que suivant la valeur de consigne formée (md-ga-faw, pw-faw), on règle le couple moteur ou la puissance motrice en déterminant un intervalle (I) avec des limites d'intervalle prédéfinies (pw-min, pw-tot), ces limites d'intervalle étant formées avec des valeurs maximales et minimales pour le couple moteur ou la puissance motrice à régler et on forme les valeurs de consigne (md-ga-faw, pw-faw) suivant l'intervalle (I) obtenu, et on compare la position (hfp) de la pédale d'accélérateur à un seuil inférieur (hfp-np) et/ou à un seuil supérieur (hfp-kd) et on forme la valeur de consigne (md-ga-faw) du couple moteur ou la valeur de consigne (pw-faw) de la puissance motrice en fonction de cette comparaison, et on saisit une grandeur (v-fzg) représentant la vitesse longitudinale du véhicule,
**caractérisé en ce qu'**
on prédétermine les seuils, dont au moins un seuil est dépendant de la grandeur saisie (v-fzg) représentant la vitesse.

2. Procédé selon la revendication 1,
**caractérisé en ce que**

- si la position (hfp) de la pédale d'accélérateur passe en dessous du seuil inférieur (hfp-np) on règle une valeur de consigne négative (md-ga-faw, pw-faw) (mode tiré), et/ou
- si la position (hfp) de la pédale d'accélérateur se situe entre les seuils (hfp-np, hfp-kd) on règle une valeur de consigne (md-ga-faw, pw-faw) dans les limites d'intervalle (pw-min, pw-tot) (mode de fonctionnement normal), et/ou
- si la position (hfp) de la pédale d'accélérateur dépasse le seuil supérieur (hfp-kd) on règle une valeur de consigne (md-ga-faw, pw-faw) qui dépasse la limite supérieure de l'intervalle (mode de rétrogradation forcée).

3. Procédé selon la revendication 1,
**caractérisé en ce qu'**

- on détermine la limite inférieure de l'intervalle (pw-min) en fonction de la puissance minimale que peut fournir instantanément le moteur (101) du véhicule ou en fonction du couple minimum que peut fournir instantanément le moteur (101) du véhicule et en fonction de la démultiplication instantanée du couple [mue-get (u) ] de la boîte de vitesses (103), suivant l'état de fonctionnement d'un convertisseur (102) dans la ligne de transmission, et/ou suivant l'état de fonctionnement d'un embrayage dans la ligne de transmission, et/ou
- on détermine la limite supérieure de l'intervalle (pw-tot) suivant la puissance maximale ou le couple maximal réalisable instantanément par le moteur (101) du véhicule et/ou suivant le rendement instantané des composants (102, 103) formant la ligne de transmission.

4. Procédé selon la revendication 1,
**caractérisé en ce qu'**
on saisit une grandeur de vitesse (v-fzg) représentant la vitesse longitudinale du véhicule et on détermine la limite supérieure de l'intervalle (pw-tot) et/ou la limite inférieure de l'intervalle (pw-min) en fonction de la grandeur de vitesse saisie (v-fzg).

5. Procédé selon la revendication 1,
**caractérisé en ce qu'**
on détermine une grandeur de type de conducteur (ftyp) représentant le comportement en conduite du conducteur et on forme la valeur de consigne (md-ga-faw) du couple moteur ou la valeur de consigne (pw-faw) de la puissance motrice suivant la grandeur de type de conducteur (ftyp) obtenue.

Fig. 1

EP 1 058 628 B1

Fig. 2

EP 1 058 628 B1

Fig. 3

EP 1 058 628 B1

# Fig. 4

hfp

v_fzg

108

24  ftyp

42  fp_rel

43

KL_FP_FT1

44

KL_FP_FT0

45  −

46  X

47  +

fp_rel_ft

48  pw_faw

Fig. 5

Fig. 6